# NEUE EUROPÄISCHE PATENTSCHRIFT

(11) **EP 0 633 752 B2**
(45) Veröffentlichungstag und Bekanntmachung des Hinweises auf die Entscheidung über den Einspruch: **29.12.1999**
(45) Hinweis auf die Patenterteilung: 12.06.1996
(21) Anmeldenummer: 93904015.0
(22) Anmeldetag: 25.02.1993
(51) Int. Cl.: A61C 17/14

(54) **EINRICHTUNG ZUM FÖRDERN IN EINER ZAHNARZTPRAXIS ANFALLENDEN ABWASSERS ZU EINEM ZENTRALEN ENTSORGUNGSANSCHLUSS**
DEVICE FOR CONVEYING WASTE WATER PRODUCED IN A DENTAL SURGERY TO A CENTRAL DISPOSAL CONNECTION
DISPOSITIF D'ACHEMINEMENT DES EAUX RESIDUELLES PRODUITES DANS UN CABINET DENTAIRE, VERS UN RACCORDEMENT D'EVACUATION CENTRAL

(30) Priorität: 27.02.1992 DE 4205936
(43) Veröffentlichungstag der Anmeldung: 18.01.1995
(73) Patentinhaber: Dürr-Dental GmbH & Co. KG, D-74321 Bietigheim-Bissingen (DE)
(72) Erfinder: DÜRR, Walter, D-7250 Leonberg (DE); GROTZ, Uwe, D-7022 Leinfelden-Echterdingen (DE)
(74) Vertreter: Ostertag, Reinhard
(86) Internationale Anmeldenummer: EP9300433
(87) Internationale Veröffentlichungsnummer: WO9316655

(56) Entgegenhaltungen:
- EP-A- 0 108 983
- EP-A- 0 124 887
- EP-A- 0 211 808
- EP-A- 0 237 708
- DE-A- 2 929 804
- DE-A- 3 232 290
- DE-A- 3 601 254
- DE-A- 4 010 617
- DE-C- 3 514 331
- Firmenprospekt der Fa. Kaltenbach & Voigt GmbH & Co: Ersatzteile/Bausätze ESTETICA 1042, Ausgabedatum 9/89, Seiten D12/50, D12/77 und D12/79

## Beschreibung

Die Erfindung betrifft eine Einrichtung zum Fördern in einer Zahnarztpraxis anfallenden Abwassers zu einem zentralen Entsorgungsanschluß gemäß dem Oberbegriff des Anspruches 1.

Eine derartige Fördereinrichtung ist in der EP-A1-0 237 708 beschrieben.

Aus der DE-A1-32 32 290 ist ferner bekannt, die in einem zahnärztlichen Arbeitsplatz verlaufenden Leitungen unter Verwendung von Frischwasser zu spülen. Das Frischwasser wird über ein Magnetventil in einen Überlaufbehälter gegeben, dessen Überströmkante um eine vorgebene Fallstrecke unterhalb der Abgabeöffnung des Magnetventiles liegt. Auf diese Weise ist ein Rückwandern von Keimen in das Frischwassernetz ausgeräumt.

Bei Fördereinrichtungen der eingangs angesprochenen Art, die in der Praxis oft zu zentralen Feststoff-Abscheideeinrichtungen führen, ist es oft notwendig, die Sammelleitung und/oder eine oder mehrere der Verbindungsleitungen zumindest in einem Abschnitt derselben mit nur kleinem oder ganz verschwindendem Gefälle zu führen. In diesen Leitungsabschnitten besteht dann die Gefahr, daß sich vom Abwasser mitgeschleppte Feststoffpartikel absetzen, und trocknet die Leitung nach dem Absetzen der Feststoffpartikel aus, kann sich im Laufe der Zeit in derartigen Leitungsabschnitten ohne ausreichendes Gefälle eine zusammengebackene Schicht aus abgeschiedenen Festkörperpartikeln aufbauen. Da unter den aus dem Abwasser abgeschiedenen Feststoffpartikel auch Amalgampartikel sind, ist ein späterer Ausbau und eine Entsorgung derartiger Leitungsabschnitte problematisch.

Durch die vorliegende Erfindung soll daher eine Fördereinrichtung gemäß dem Oberbegriff des Anspruches 1 so weitergebildet werden, daß ein Festbacken von Festkörperpartikeln an den Wänden von Leitungsabschnitten mit nur geringem Gefälle verhindert wird.

Diese Aufgabe ist erfindungsgemäß gelöst durch eine Fördereinrichtung gemäß Anspruch 1.

Bei der erfindungsgemäßen Fördereinrichtung wird durch die Verbindungsleitungen und die Sammelleitung in Abständen ein Spülmedium hindurchbewegt, welches sowohl Wasseranteile als auch Luftanteile hat. Auf diese Weise erhält man einen nicht laminaren Strom von Spülmedium in den nur schwach geneigten Leitungsabschnitten, und dieser Spülmediumstrom wirbelt abgesetzte aber noch nicht festgebackene Festkörperpartikel auf und trägt sie weiter. Durch die Mischung von Wasser und Luft erhält man ein gutes Wiederinschwebebringen von Feststoffpartikeln bei geringem Wassereinsatz. Würde man nur mit reiner Wasserspülung arbeiten, wäre zum Aufwirbeln abgesetzter Festkörperpartikel eine deutlich größere Wassermenge notwendig.

Hierbei ist auch ein schlagartiges rasches Freigeben eines Spülmediumquantums von Vorteil. Diese rasche Freigabe führt zu einer starken Turbulenz im Spülmedium und damit zu besonders effektiver Mitnahme abgesetzter Feststoffpartikel.

Vorteilhafte Weiterbildungen der Erfindung sind in Unteransprüchen angegeben.

Bei einer Einrichtung gemäß Anspruch 2 wird durch die Spülluft das gespeicherte Spülwasservolumen beschleunigt.

Bei einer Fördereinrichtung gemäß Anspruch 3 erfolgt das Hindurchziehen von Wasser und Luft durch die zu reinigenden Leitungen durch den von der ebenfalls zentralen Saugmaschine erzeugten Unterdruck sehr effektiv und ohne zusätzlichen apparativen Aufwand.

Eine Fördereinrichtung gemäß Anspruch 4 arbeitet besonders leise, ohne daß eine separate Leitung zum Ansaugen der Spülluft von einem entfernten Orte her vorgesehen zu werden bräuchte.

Die Weiterbildung der Erfindung gemäß Anspruch 5 ist im Hinblick auf ein unbehindertes Beschleunigen der Spülwassermenge und im Hinblick auf eine gute Verwirbelung von Spülwasser und Spülluft zu einem turbulenten Spülmedium von Vorteil.

Die Weiterbildung der Erfindung gemäß Anspruch 6 erleichtert die Installation der Fördereinrichtung, da sämtliche zusätzlich zum Stand der Technik vorzusehenden Anschlüsse an einem einzigen Bauteil vorgesehen sind. Auf diese Weise kann man die Erfindung auch leicht an schon vorhandenen Arbeitsplätzen nachrüsten.

Die Weiterbildung der Erfindung gemäß Anspruch 7 ist im Hinblick auf das Speichern eines großen Spülwasservolumens, auf effektive Beschleunigung des gespeicherten Spülwasservolumens und im Hinblick auf gute Verwirbelung des Spülmediums von Vorteil.

Bei einer Fördereinrichtung gemäß Anspruch 8 wird das vom Speibecken abgegebene Wasser zugleich zu Spülzwecken verwendet. Es ist hierzu gut geeignet, da es seinerseits nur geringe Anteile an kleinen Durchmesser aufweisenden Feststoffpartikeln enthält. Auf diese Weise wird ein Mehrverbrauch an Wasser kleingehalten oder ganz vermieden.

Erzeugt man ein Wasser- und Luftanteile enthaltendes Spülmedium dadurch, daß man den Spiegel eines gespeicherten Spülwasservolumens über ein Servoventil mit der Umgebungsatmosphäre in Verbindung bringt, wodurch ein Luft- und Wasseranteile enthaltendes verwirbeltes Spülmedium durch die Leitungen gesaugt wird, so kann durch einen solchen Spülvorgang die an anderen Arbeitsplätzen zur Verfügung stehende Unterdruckleistung beeinträchtigt werden. Bei einer Fördereinrichtung gemäß Anspruch 9 ist gewährleistet, daß durch einen anstehenden Spülvorgang bereits begonnene Arbeiten nicht beeinträchtigt werden. Bei geringere Leistung aufweisenden Saugmaschinen ist die vorgegebene Mindestzahl Eins, das heißt, daß ein Spülvorgang erst dann eingeleitet wird, wenn der letzte Unterdruckverbraucher abgeschaltet wird. Bei stärkeren Sauganlagen kann man die vorgegebene Mindestzahl z.B. auch gleich Zwei oder Drei wählen.

Mit der Weiterbildung der Erfindung gemäß Anspruch 10 wird erreicht, daß die an den einzelnen Arbeitsplätzen in das Leitungssystem eingeschleusten Spülmediummengen zeitlich so gegeneinander versetzt sind, daß sie sich in mehreren Arbeitsplätzen gemeinsamen Leitungsabschnitten nicht gegenseitig überlappen und behindern. Man erhält so in den gemeinsamen Leitungsabschnitten eine besonders effektive und langanhaltende Spülung.

Bei einer Fördereinrichtung gemäß Anspruch 11 ist gewährleistet, daß ein Spülen der schwach geneigten Leitungsabschnitte in vorgegebenen Mindestabständen auch dann erfolgt, wenn an keinem der Arbeitsplätze gearbeitet wird. Dies kann entweder unter Verwendung eines Taktgebers oder durch Betätigung eines Schalters von Hand erfolgen, letzteres z.B. vor der Mittagspause und am Abend.

Ein Erzeugen des verwirbelten Spülmediums, wie es im Anspruch 12 angegeben ist, läßt sich auch bei solchen Praxisinstallationen realisieren, bei denen keine zentrale Unterdruckversorgung vorgesehen ist oder eine solche nicht über die Abwasserinstallation erfolgt. Man kann eine Spülmediumquelle, wie sie im Anspruch 12 vorgesehen ist, auch als zusätzliche Spülmediumquelle an einem zentral mit Unterdruck versorgten Arbeitsplatz vorsehen, um die zu diesem Arbeitsplatz führenden Leitungen auf andere Weise zusätzlich spülen zu können.

Die Weiterbildung der Erfindung gemäß Anspruch 13 ist im Hinblick auf ein weiter verbessertes Ablösen abgesetzter Feststoffpartikel von Vorteil, da das verwirbelte Spülmedium aus Luft und Wasser unter erhöhter Strömungsgeschwindigkeit durch kritische Leitungsabschnitte bewegt wird.

Mit der Maßnahme gemäß Anspruch 14 wird eine zusätzliche Verwirbelung des Spülmediums in den zu reinigenden Leitungen selbst erhalten, was wiederum das Ablösen der Feststoffpartikel begünstigt.

Verwirbelungsmittel gemäß Anspruch 15 lassen sich zum einen einfach herstellen und zeichnen sich durch sanfte Übergänge zur Leitungswand aus.

Die Weiterbildung der Erfindung gemäß Anspruch 16 ist ebenfalls im Hinblick auf eine gute Verwirbelung und möglichst wenig laminare Strömung in den Leitungen von Vorteil.

Nachstehend wird die Erfindung anhand von Ausführungsbeispielen unter Bezugnahme auf die Zeichnung näher erläutert. In dieser zeigen:
- Figur 1:: ein Prinzipschaltbild einer Zahnarztpraxis mit drei Arbeitplätzen, anhand dessen die Abwasserentsorgung erläutert wird;
- Figur 2:: das Blockschaltbild eines der Arbeitsplätze der in Figur 1 gezeigten Zahnarztpraxis;
- Figur 3:: ein abgewandeltes Schaltbild eines zahnärztlichen Arbeitsplatzes;
- Figur 4:: einen Längsschnitt durch ein Siphongehäuse, welches bei jedem der Arbeitsplätze vorhanden ist, längs der abgewinkelten Schnittlinie IV-IV von Figur 5;
- Figur 5:: eine Aufsicht auf das Siphongehäuse nach Figur 4;
- Figur 6:: eine Aufsicht auf die Unterseite des Siphongehäuses nach Figur 4;
- Figur 7:: einen vertikalen transversalen Schnitt durch das Siphongehäuse nach Figur 4 längs der dortigen Schnittlinie VII-VII;
- Figur 8:: das Prinzipschaltbild einer Steuereinheit, die das Spülen von Verbindungsleitungen zwischen den Arbeitsplätzen und einer zentralen Abscheideeinheit von Figur 1 steuert;
- Figur 9:: eine schematische Darstellung einer Verbindungsleitung;
- Figur 10:: eine seitliche, teilweise geschnittene Ansicht einer mit Eindrückungen versehenen Verbindungsleitung; und
- Figur 11:: ein Blockschaltbild eines herkömmlichen Arbeitsplatzes, der zusätzlich mit einer Spülmediumquelle versehen ist.

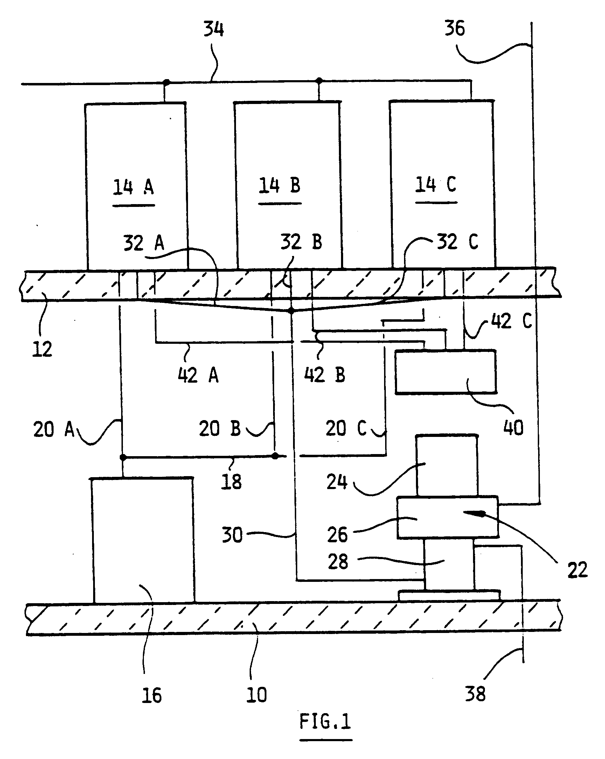

In Figur 1 ist mit 10 der Kellerboden eines Gebäudes, mit 12 die Erdgeschoßdecke des Gebäudes bezeichnet. Im Erdgeschoß sind drei zahnärztliche Arbeitsplätze 14A, 14B und 14C vorgesehen.

In einem Kellerraum des Gebäudes ist ein Kompressor 16 aufgestellt, der über eine Verteilerleitung 18 und hieran angeschlossene Zweigleitungen 20A, 20B und 20c mit den Arbeitsplätzen 14 verbunden ist.

Im gleichen Kellerraum ist ferner eine Kombieinheit 22 aufgestellt, die zur Unterdruckversorgung und gleichzeitig zur Abwasserreinigung dient. Zu ihr gehört ein Antriebsmotor 24, eine durch diesen angetriebene Saugmaschine 26 sowie eine der letzteren vorgeschaltete Abscheideeinheit 28, die ihrerseits aus einer Zentrifuge und einem dieser vorgeschalteten Zyklon besteht. Einzelheiten der Kombieinheit 22 können der EP-A1-0 237 708 entnommen werden, auf die diesbezüglich Bezug genommen wird.

Die Kombieinheit 22 ist über eine Sammelleitung 30 und Verbindungsleitungen 32A, 32B und 32C mit den Arbeitsplätzen 14 verbunden. Die Verbindungsleitungen 32, ggf. über der Erdgeschoßdecke 12 verlaufende Leitungsabschnitte zu den Arbeitsplätzen 14 (und beim betrachteten Ausführungsbeispiel auch ein unterer Abschnitt der Sammelleitung 30) haben nur geringes Gefälle.

Wie ferner in Figur 1 gezeigt, sind die Arbeitsplätze 14 mit einer Frischwasserleitung 34 verbunden. Der Auslaß der Saugmaschine 26 ist mit einer über Dach führenden Abluftleitung 36 verbunden, und der Flüssigkeitsauslaß der Abscheideeinheit 28 ist über eine Leitung 38 an das öffentliche Kanalnetz angeschlossen.

Eine Steuereinheit 40 ist über Kabel 42A, 42B, 42C mit den Arbeitsplätzen 14 verbunden und veranlaßt diese jeweils zur Abgabe von Spülmedium, durch welches die geringes Gefälle aufweisenden Abschnitte der Verbindungsleitungen 32 und der Sammelleitung 30 von abgesetzten feinen Festkörpern befreit werden, wie nachstehend nun genauer beschrieben werden wird.

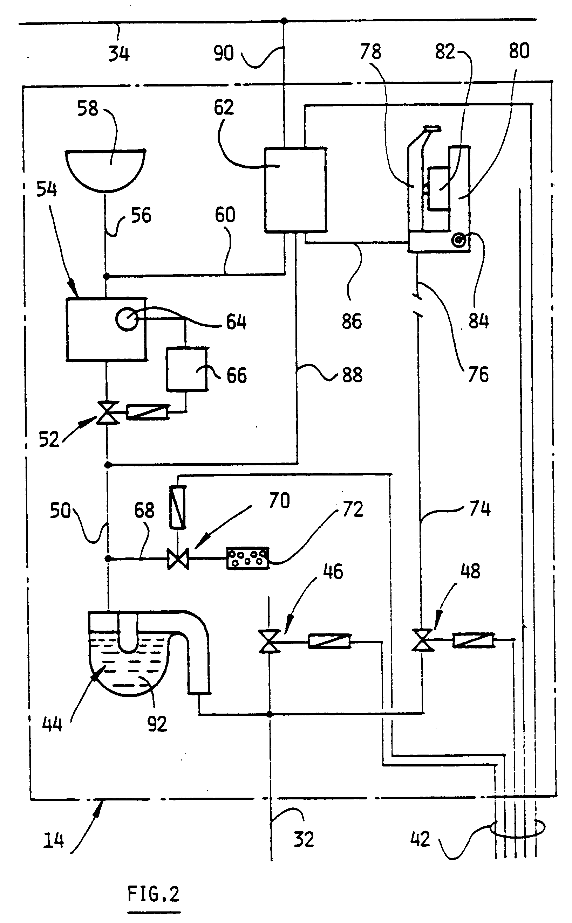

Wie aus Figur 2 ersichtlich, ist bei jedem Arbeitsplatz 14, der am Ende einer Verbindungsleitung 32 liegt, die entsprechende Verbindungsleitung 32 mit dem Auslaß eines Siphons 44, einem Nebenluftventil 46 sowie einem Platzwahlventil 48 verbunden.

Der Einlaß des Siphons 44 ist an eine Leitung 50 angeschlossen, die über ein Trennventil 52 mit einem Zwischenspeicher 54 verbunden ist. Der Einlaß des Zwischenspeichers ist über eine Leitung 56 mit einem Speibecken 58 und über eine Leitung 60 mit einer steuerbaren Spülwasserquelle 62 verbunden.

Im Zwischenspeicher 54 ist ein Schwimmerschalter 64 vorgesehen, der über eine Leistungsstufe 66 das als Magnetventil ausgebildete Trennventil 52 betätigt. Das Trennventil 52 hat einen speziell ausgebildeten kegelförmigen Ventilkörper, wodurch ein großer Durchströmquerschnitt gewährleistet ist und auch beim Steuern Verunreinigungen enthaltender Flüssigkeit ein dichtes Schließen gewährleistet ist.

An die Leitung 50 ist ferner eine Zweigleitung 68 angeschlossen, die ein Spülluftventil 70 enthält. Das freie Ende der Zweigleitung 68 ist durch einen Schalldämpfer 72 verschlossen, der auf geringen Strömungswiderstand ausgelegt ist.

Von der Verbindungsleitung 32 geht ferner eine Saugleitung 74 aus, die das Platzwahlventil 48 enthält. An die Saugleitung 74 ist über einen flexiblen Schlauch 76 ein Speichelheber 78 angeschlossen, der bei Nichtgebrauch in einer Ablage 80 abgestellt wird. In dieser Ruhestellung betätigt der Speichelheber 78 einen Mikroschalter 82.

Zum Reinigen der Leitungen ist an der Ablage 80 ein Stutzen 84 vorgesehen, auf den der Schlauch 76 nach Abnehmen des Speichelhebers 78 aufschiebbar ist. Der Stutzen 84 steht über eine Leitung 86 mit der Spülwasserquelle 62 in Verbindung, die im übrigen noch über eine Leitung 88 mit der Leitung 50 verbunden ist und einlaßseitig an die Frischwasserleitung 34 angeschlossen ist.

Die das Nebenluftventil 46, das Platzwahlventil 48 und das Spülluftventil 70 bildenden Magnetventile, der Mikroschalter 82 und eine Steuerklemme der Spülwasserquelle 62 sind mit Adern des dem betrachteten Arbeitsplatz zugeordneten Kabels 42 verbunden.

Mit der in Figur 2 dargestellten Ausbildung der Arbeitsplätze 14 lassen sich die Verbindungsleitungen 32 und die Sammelleitung 30 wie folgt spülen:

In das Speibecken 58 gelangendes Wasser wird zunächst im Zwischenspeicher 54 gesammelt, bis der Schwimmerschalter 64 das Trennventil 52 öffnet. Das im Zwischenspeicher 54 enthaltene Wasservolumen sinkt in den Siphon 44 ab, in welchem sich eine durch seine Überlaufkante vorgegebene Wassermenge 92 hält.

Die Spülwasserquelle 62 wird über die Spülsteuereinheit 40 so gesteuert, daß der Siphon 44 in vorgebenen zeitlichen Abständen, sei es über die Leitung 60 und den Zwischenspeicher 54, sei es direkt über die Leitung 88, gefüllt wird.

Hebt der Zahnarzt den Speichelheber 78 von der Ablage 80 ab, erkennt dies die Steuereinheit 40 und öffnet das Platzwahlventil 48. Nun ist die Saugleitung 74 mit Unterdruck beaufschlagt und saugt Speichel, Kühlwasser und Bohrklein aus dem Mund des Patienten ab. Dieses Gemisch gelangt über die Verbindungsleitung 32 und die Sammelleitung 30 in die Kombieinheit 22, wo es in seine Bestandteile zerlegt wird. Die Luftbestandteile werden über die Abluftleitung 36 abgegeben, die flüssigen Bestandteile werden über die Leitung 38 an die öffentliche Kanalisation abgegeben, und die festen Anteile werden in einem Sammelbehälter der Kombieinheit 22 zurückgehalten.

Bei diesem normalen Arbeiten verbleibt die Wassermenge 92 im Siphon 44, da das Trennventil 52 und das Spülluftventil 70 geschlossen sind.

Legt der Zahnarzt den Speichelheber 78 wieder ab, so erkennt dies die Steuereinheit 40 am Schließen des Mikroschalters 82. Sind auch die Mikroschalter der anderen Arbeitsplätze geschlossen, so erregt die Steuereinheit 40 das Spülluftventil 70 und über die Zweigleitung 68 wird nun unter geringer Drosselung Luft über den Schalldämpfer 72 angesaugt. Die Wassermenge 92 ist nun einem Druckunterschied ausgesetzt und wird in die Verbindungsleitung 32 angesaugt. Sowie sich ein Luftdurchlaß im Siphon bildet, tritt auch eine Luftmenge in die Verbindungsleitung 32 ein. Der nun kurzfristig druckausgeglichene Rest der Wassermenge 92 pendelt unter Schwerkrafteinwirkung zurück, und es baut sich sehr rasch wieder ein Druckunterschied auf, wodurch eine weitere Wasser-Teilmenge abgesaugt wird. Ferner ergibt sich eine dynamische Wassermitnahme durch die rasch bewegte Luft, und man erhält insgesamt in der Verbindungsleitung 32 und später auch in der Sammelleitung 30 ein Spülmedium, welches aus verwirbelten Wasser- und Luftanteilen besteht. Dieses verwirbelte Spülmedium löst noch nicht festgebackene abgesetzt Festkörperpartikel von den Wänden der Verbindungsleitung 32 und der Sammelleitung 30 ab und transportiert diese zu der Kombieinheit 22, wo sie in den Feststoff-Sammelbehälter gelangen.

Nach Ablauf einer Zeitspanne, die für einen solchen Spülvorgang ausreichend ist, schließt die Steuereinheit 40 das Spülluftventil 70 wieder, so daß an den Arbeitsplätzen 14 wieder normal gearbeitet werden kann.

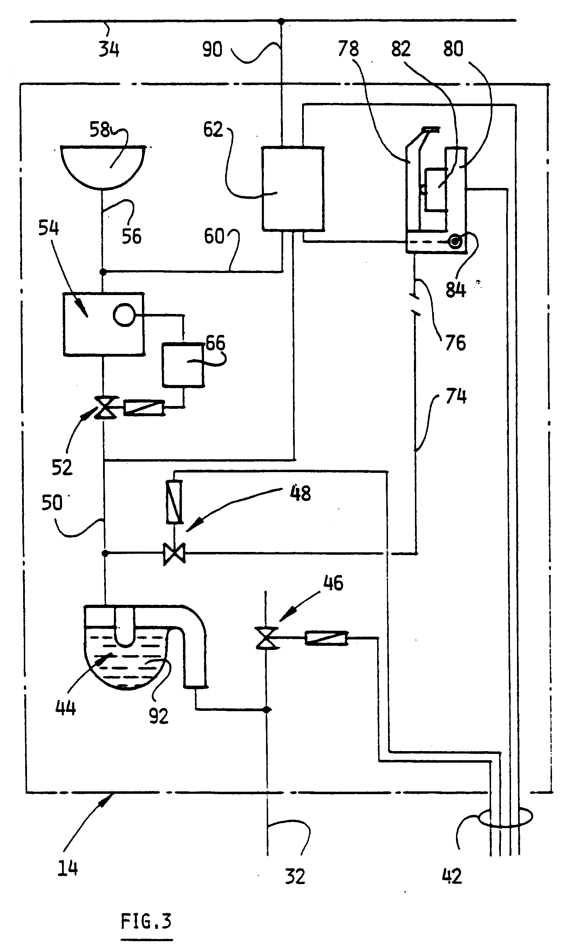

Das Arbeitsplatz-Ausführungsbeispiel nach Figur 3 entspricht weitgehend demjenigen nach Figur 1, nur übernimmt das Platzwahlventil zugleich die Aufgabe des Spülluftventiles. Die Steuereinheit 40 arbeitet nun so, daß sie jeweils beim Ablegen des Speichelhebers 78 die Spülwasserquelle 62 aufsteuert, so daß der Siphon 44 mit Wasser gefüllt wird. Beim Abheben des Speichelhebers 78 wird dann jeweils ein Leitungs-Spülzyklus durchgeführt.

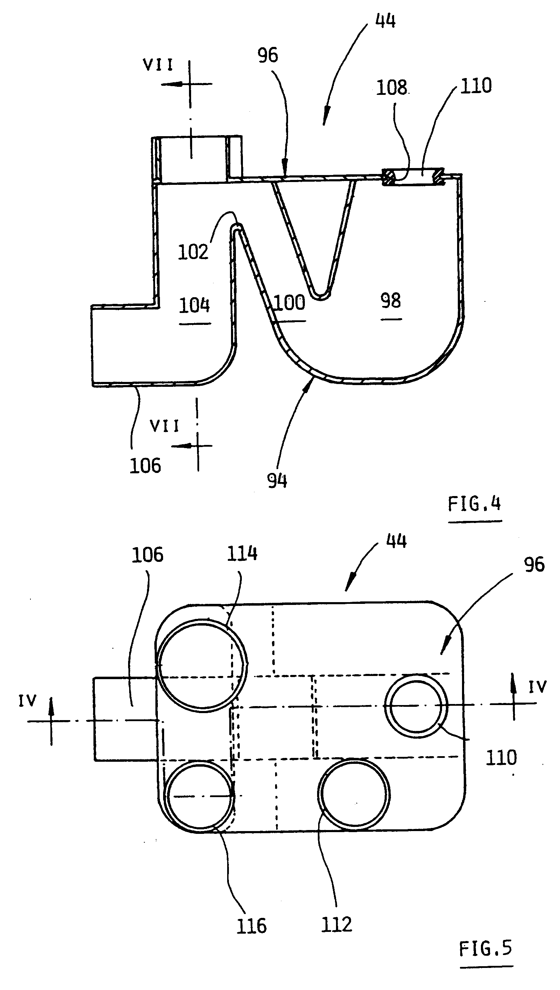

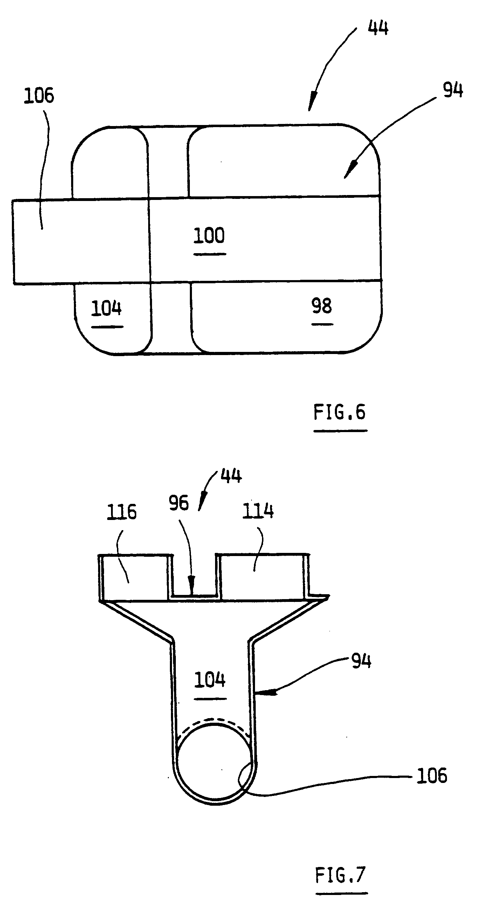

Das in den Figuren 4 bis 7 gezeigte praktische Ausführungsbeispiel für einen Siphon 44 ist für den Einsatz bei einem Arbeitsplatz gemäß Figur 2 gedacht und beinhaltet zugleich die Leitungsverbindungen zum Nebenluftventil 46, zum Platzwahlventil 48 und zum Spülluftventil 70.

Der Siphon 44 besteht aus einem unteren Gehäuseteil 94 sowie einem Deckel 96. Durch entsprechende Gestaltung des unteren Gehäuseteiles 94 ist ein großen Querschnitt aufweisender Einlaßabschnitt 98 sowie ein kleineren Querschnitt aufweisender Auslaßabschnitt 100 des Siphons vorgegeben. Letzterer ist durch eine Überlaufwand 102 von einer Auslaßkammer 104 getrennt. Letztere ist mit einem Stutzen 106 versehen, der an die Verbindungsleitung 32 angeschlossen wird.

Der Deckel 96 ist in seinem über dem Einlaßabschnitt 98 liegenden Abschnitt mit einer Anschlußöffnung 108 versehen, an welche mittels einer Dichtung 110 die Leitung 50 angeschlossen wird. Ebenfalls mit dem Einlaßabschnitt 98 in Verbindung stehend, trägt der Deckel 96 einen Stutzen 112, an welchen das Spülluftventil 70 angeschlossen wird.

In dem über der Auslaßkammer 104 liegenden Abschnitt trägt der Deckel 96 zwei Stutzen 114, 116, an welche das Nebenluftventil 46 und das Platzwahlventil 48 angeschlossen werden.

Die verschiedenen Magnetventile können somit schon in der Fabrik an den Siphon 44 angebaut werden, was die Installation und insbesondere auch ein Nachrüsten an einem schon bestehenden Arbeitsplatz erleichtert. Der Siphon 44 und die genannten Magnetventil bilden eine übersichtliche kompakte Einheit.

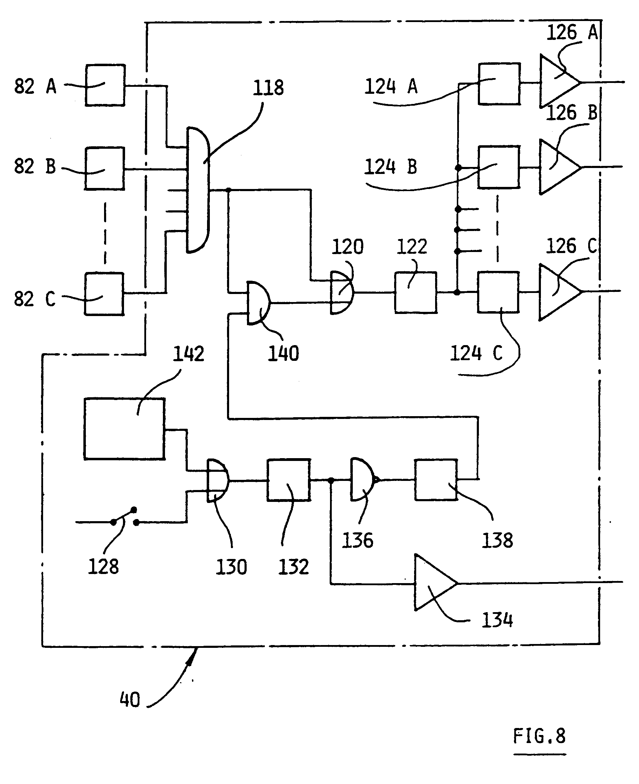

Figur 8 zeigt schematisch ein einfaches praktisches Ausführungsbeispiel für die Steuereinheit 40. Die Mikroschalter 82A, 82B und 82C der Arbeitsplätze 14A, 14B und 14C sind mit den Eingängen eines UND-Gliedes 118 verbunden, wobei Anschlußmöglichkeiten für weitere Arbeitsplätze angedeutet sind. Der Ausgang des UND-Gliedes 118 ist über ein ODER-Glied 120 mit dem Steuereingang einer monostabilen Kippstufe 122 verbunden. Deren Ausgang ist über Verzögerungskreise 124A, 124B und 124C sowie nachgeschaltete Leistungsverstärker 126A, 126B und 126C mit den Magneten der Spülluftventile 70 der Arbeitsplätze verbunden. Die Periode der Kippstufe 122 gibt die Länge eines Spülzyklus vor. Die Größe der Signalverzögerung, welche die Verzögerungskreise 124 bewerkstelligen, ist so gewählt, daß sich die von den einzelnen Arbeitsplätzen abgegebenen Spülmedium-Mengen im Leitungswerk nicht überlappen, vorzugsweise direkt aufeinander folgen. Die für die verschiedenen Verzögerungskreise 124 jeweils benötigten Verzögerungen hängen somit von der Länge der verschiedenen Verbindungsleitungen 32 ab.

Da die Kippstufe 122 auf ansteigende Signalflanken triggert, wird ein Spülzyklus jeweils dann eingeleitet, wenn der letzte der zuvor in Benutzung befindlichen Speichelheber auf seine Ablage zurückgelegt wird.

Hat die Saugmaschine 26 eine so große Leistung, daß auch dann, wenn an einem Arbeitsplatz ein Spülzyklus durchgeführt wird, an den anderen Arbeitsplätzen noch eine ausreichende Saugleistung vorhanden ist, kann man in Abwandlung des beschriebenen Ausführungsbeispieles auch für jeden Arbeitsplatz einen Spülzyklus jeweils dann einleiten, wenn der dortige Speichelheber auf die Ablage zurückgelegt wird.

Ist die Saugmaschine nicht ganz so leistungsfähig, bringt aber dann, wenn ein Spülzyklus an einem Arbeitsplatz durchgeführt wird, immer noch ausreichende Saugleistung für einen weiteren oder zwei weitere Arbeitsplätze, so kann man das UND-Glied 118 durch eine Schaltung ersetzen, die immer dann ein Ausgangssignal erzeugt, wenn nur einer bzw. nur zwei der Mikroschalter 82 noch offen sind.

Um zu einem vom Benutzer gewünschten Zeitpunkt eine Spülung des Leitungssystemes zu veranlassen, ist ein durch den Benutzer betätigbarer Schalter 128 vorgesehen. Dessen Ausgangssignal stößt über ein ODER-Glied 130 eine monostabile Kippstufe 132, die über einen Leistungsverstärker 134 auf die steuerbaren Spülwasserquellen 62 arbeitet. Die Periode der Kippstufe 132 ist so bemessen, daß der Siphon 44 innerhalb dieser Zeitspanne voll von der Spülwasserquelle 62 her gefüllt werden kann.

Der Ausgang der Kippstufe 132 ist ferner über ein NAND-Glied 136 und einen Verzögerungskreis 138 mit dem einen Eingang eines UND-Gliedes 140 verbunden, dessen zweiter Eingang an den Ausgang des UND-Gliedes 118 angeschlossen ist. Der Ausgang des UND-Gliedes 140 ist mit einem Zweiten Eingang des ODER-Gliedes 120 verbunden.

Damit führt ein Schließen des Schalters 128 zunächst zu einem Füllen der Siphons 44 aller Arbeitsplätze. Um eine durch den Verzögerungskreis 138 vorgegebene Zeitspanne verzögert, wird dann ein Spülzyklus ausgelöst, vorausgesetzt, alle Speichelheber 78 befinden sich in der zugeordneten Ablage 80.

Ein zweiter Eingang des ODER-Gliedes 130 ist mit dem Ausgang eines Taktgebers 142 verbunden, der entweder ein freilaufender Taktgeber oder eine Schaltuhr sein kann. Auf diese Weise ist gewährleistet, daß ein Spülen des Leitungssystemes in vorgegebenen zeitlichen Abständen oder zu vorgegebenen Uhrzeiten erfolgt.

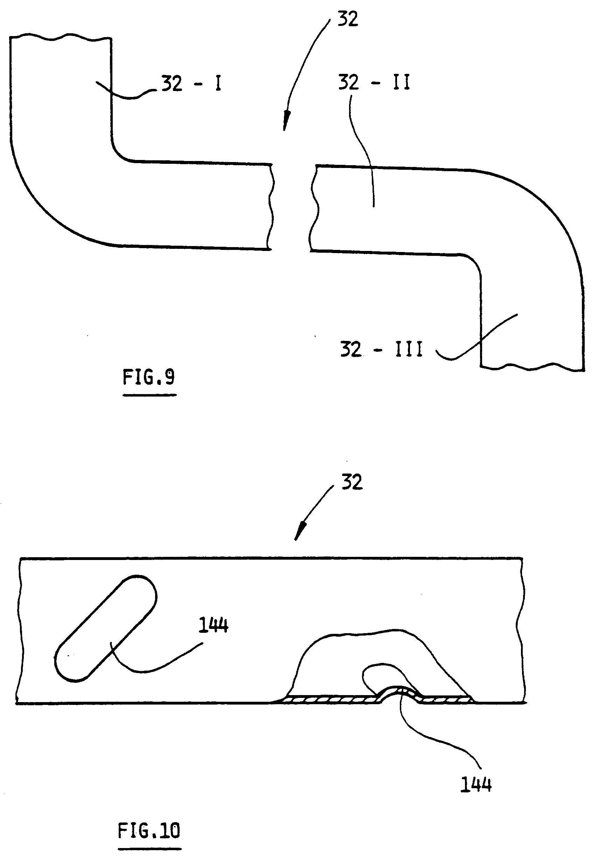

Figur 9 zeigt einen Ausschnitt aus einer Verbindungsleitung 32. Man erkennt Leitungsabschnitte 32-I und 32-III, die vertikal verlaufen, also großes Gefälle haben, sowie einen dazwischen liegenden Leitungsabschnitt 32-II mit geringem Gefälle. Der Leitungsabschnitt 32-II hat kleineren Durchmesser als die Leitungsabschnitte 32-I und 32-III, und infolge dessen hat das aus Luft und Wasser bestehende verwirbelte Spülmedium in dem bezüglich Absetzen von Feststoffpartikeln besonders gefährdeten Leitungsabschnitt 32-II erhöhte Strömungsgeschwindigkeit. Hierdurch werden abgesetzte Feststoffpartikel besonders gut wieder aufgewirbelt.

Figur 10 zeigt einen Abschnitt eines Leitungsmateriales, welches sich insbesondere zur Realisierung schwach geneigter Leitungsabschnitte der Abwasserleitungen eignet. In der Rohrwand sind Eindrückungen 144 vorgesehen, die bezüglich des Abstandes, in dem sie aufeinanderfolgen, bezüglich ihres Anstellwinkels und bezüglich ihrer Winkellage unregelmäßig verteilt sind. Hierdurch wird dem Aufbau einer laminaren Strömung entgegengewirkt.

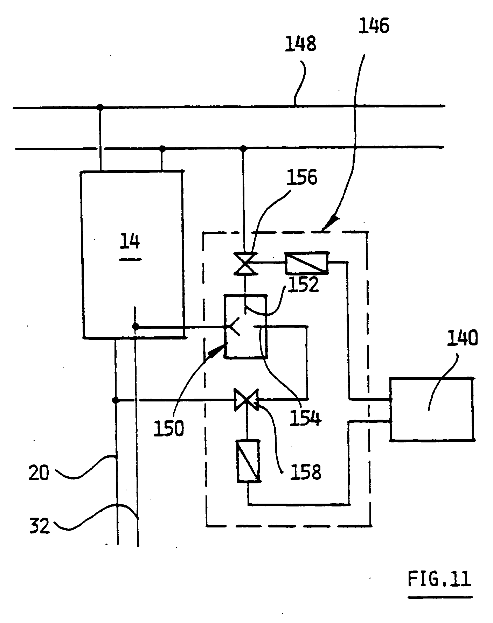

Figur 11 zeigt eine steuerbare Spülmediumquelle 146, die als Nachrüsteinheit für einen schon existierenden Arbeitsplatz 14 ausgebildet ist, wobei die Unterdruckversorgung des Arbeitsplatzes 14 über eine gesonderte Unterdruckleitung 148 erfolgt und nicht über die auch zur Wasserentsorgung vorgesehenen Leitungen 30, 32.

Die Spülmediumquelle 146 hat eine mit dem Ende der Verbindungsleitung 32 verbundene Mischkammer 150, in welche eine Wasserabgabedüse 152 und eine Luftabgabedüse 154 einmünden.

Die Wasserabgabedüse 152 ist über ein Magnetventil 156 mit der Frischwasserleitung 34 verbunden. Die Luftabgabedüse 154 ist über ein Magnetventil 158 mit der Druckluft-Zweigleitung 20 verbunden. Die Ansteuerung der Magnetventile 156, 158 erfolgt gleichzeitig durch ein nun dem einzelnen Arbeitsplatz zugeordnete einfacher aufgebaute Steuereinheit 40 jeweils nach Beendigung eines Arbeitszyklus oder in vorgegebenen zeitlichen Abständen, da ein Spülzyklus nun andere Arbeitsplätze nicht beeinträchtigt. Letzteres deshalb, weil in einen herkömmlichen Arbeitsplatz ein Luftabscheidezyklon eingebaut ist, der ausgangsseitig mit einer Schleuse versehen ist, so daß das aus dem vom Speichelheber angesaugten Gemisch abgeschiedene Wasser unter atmosphärischen Druck an die Verbindungsleitung 32 abgegeben wird.

Bei dem oben beschriebenen Ausführungsbeispiel waren für jeden Arbeitsplatz Vorkehrungen getroffen, um intermittierend eine Spülwassermenge in die zugehörige Zweigleitung 20 einzuspeisen. Es versteht sich, daß man dann, wenn an eine Zweigleitung mehrere Arbeitsplätze hintereinander angeschlossen sind, für diese Zweigleitung nur am Ende eine derartige Spüleinrichtung vorzusehen braucht.

Beim oben beschriebenen Ausführungsbeispiel wurde ferner die Steuerung der Spülwassereinspeisung in die Zweigleitungen, ausgehend vom Wiederzurücklegen des Speichelhebers, beschrieben. Es versteht sich, daß man alternativ oder zusätzlich eine Steuerung der Spülzyklen in Abhängigkeit vom Wiederzurücklegen einer Saugkanüle vorsehen kann.

## Patentansprüche

1. Einrichtung zum Fördern in einer Zahnarztpraxis anfallenden Abwassers, welches Feststoffpartikel enthält, zu einer zentralen Abscheideeinheit (28), mit einer von der Abscheideeinheit ausgehenden Sammelleitung (30) und mindestens einer von letzterer ausgehenden Verbindungsleitung (32), die zu einem Arbeitsplatz (14) führt, dadurch gekennzeichnet, daß am von der Sammelleitung (30) abgelegenen Ende jeder der Verbindungsleitungen (32) eine intermittierend aktivierte Spülmediumquelle (44, 70; 146) vorgesehen ist, welche ein aus Wasser und Luft bestehendes Gemisch als Spülmedium bereitstellt, und daß die Spülmediumquelle (44, 70) jeweils einen Vorratsbehälter (44) für ein Wasservolumen (92) aufweist, dessen Einlaß über ein Spülluftventil (70) mit einer Spülluftöffnung (68) verbindbar ist, so daß letztere im wesentlichen gleichzeitig wie das Innere des Vorratsbehälters (44) mit der zugeordneten Verbindungleitung (32) verbindbar ist.

2. Einrichtung nach Anspruch 1, dadurch gekennzeichnet, daß die Spülluftöffnung (68) über dem Spiegel des Wasservolumens (92) liegt und durch ein Servoventil (70) gesteuert ist.

3. Einrichtung nach Anspruch 2, wobei der Entsorgungsanschluß der Einlaß einer zentralen Abscheideeinheit (28) für die Feststoffpartikel ist und der Luftauslaß der Abscheideeinheit (28) mit dem Einlaß einer Saugmaschine (26) verbunden ist, dadurch gekennzeichnet, daß das Servoventil durch ein Platzwahlventil (48) gebildet ist, über welches ein Unterdruckverbraucher (78) des Arbeitsplatzes (14) mit der Verbindungsleitung (32) verbindbar ist.

4. Einrichtung nach einem der Ansprüche 1 bis 3, dadurch gekennzeichnet, daß den Spülluftöffnungen (68) jeweils ein Schalldämpfer (72) zugeordnet ist.

5. Einrichtung nach einem der Ansprüche 1 bis 4, dadurch gekennzeichnet, daß der Vorratsbehälter (44) als Siphon ausgebildet ist.

6. Einrichtung nach einem der Ansprüche 1 bis 5, dadurch gekennzeichnet, daß der Vorratsbehälter (44) mit einer steuerbaren Spülwasserquelle (62) verbunden ist.

7. Einrichtung nach Anspruch 6, dadurch gekennzeichnet, daß der Vorratsbehälter (44) in seiner Deckenwand (96) in Seinem über dem Siphon-Einlaßabschnitt (98) liegenden Teil einen Anschluß (108, 110) für eine zum Speibecken (58) führende Leitung (50) und einen Anschluß (112) für das Spülluft-Steuerventil (70) aufweist und in seinem über einer Auslaßkammer (104) liegenden Abschnitt mit einem Anschluß (114) für ein Platzwahlventil (48) und vorzugsweise zusätzlich mit einem Anschluß (116) für ein Nebenluftventil (46) versehen ist.

8. Einrichtung nach einem der Ansprüche 1 bis 7, dadurch gekennzeichnet, daß der Vorratsbehälter (44) über ein Trennventil (52) mit einem dem Speibecken (58) des Arbeitsplatzes (14) nachgeschalteten Zwischenspeicher (54) verbunden ist.

9. Einrichtung nach einem der Ansprüche 3 - 8, dadurch gekennzeichnet, daß dem Unterdruckverbraucher (78) eines Arbeitsplatzes (14) jeweils ein Betätigungssensor (82) zugeordnet ist und eine Steuereinheit (40) mit den Ausgangssignalen sämtlicher Betätigungssensoren (82) beaufschlagt ist und jeweils dann für eine vorgegebene Zeitspanne (122) ein Aktivierungssignal für die Spülmediumquelle (44, 70) bereitstellt, wenn eine vorgegebene Mindestanzahl ein Arbeiten des zugeordneten Unterdruckverbrauchers (78) anzeigender Betätigungssensoren unterschritten wird.

10. Einrichtung nach Anspruch 9, dadurch gekennzeichnet, daß das Aktivierungssignal über Verzögerungsglieder (124) auf die Spülmediumquellen (44, 70) gegeben wird, deren Verzögerungszeit der Länge der jeweiligen Verbindungsleitung (32) zugeordnet ist.

11. Einrichtung nach einem der Ansprüche 1 bis 10, dadurch gekennzeichnet, daß der Vorratsbehälter (44) jeweils mit einer steuerbaren Spülwasserquelle (62) verbunden ist und ein Ausgangssignal eines handbetätigten Schalters (128) oder eines Taktgebers (142), welche auf die Steuerklemme der Spülwasserquelle (62) arbeiten, über ein Verzögerungsglied (138) auf einen Steuerkreis (122) gegeben wird, welcher dann für eine vorgegebene Zeitspanne ein Aktivierungssignal für die Spülmediumquelle (44, 70) erzeugt.

12. Einrichtung nach einem der Ansprüche 1 bis 11, dadurch gekennzeichnet, daß die oder eine zusätzliche Spülmediumquelle (146) ein Mischelement (150) aufweist, welches über ein erstes Servoventil (156) mit einer unter Druck stehenden Wasserquelle (32), insbesondere einer Frischwasserleitung, verbindbar ist und über ein zweites Servoventil (158) mit einer Druckluftquelle (16 bis 20) verbindbar ist.

13. Einrichtung nach einem der Ansprüche 1 bis 12, dadurch gekennzeichnet, daß zumindest in Abschnitten der Verbindungsleitungen (32) und/oder der Sammelleitung (30) Leitungsteile (32-II) vorgesehen sind, die gegenüber benachbarten Leitungsteilen (32-I, 32-III) verminderten Durchmesser aufweisen.

14. Einrichtung nach einem der Ansprüche 1 bis 13, dadurch gekennzeichnet, daß in den Verbindungsleitungen (32), vorzugsweise auch in der Sammelleitung (30) Verwirbelungsmittel (144) vorgesehen sind.

15. Einrichtung nach Anspruch 14, dadurch gekennzeichnet, daß die Verwirbelungsmittel (144) durch Eindrückungen der Leitungswand gebildet sind.

16. Einrichtung nach Anspruch 14 oder 15, dadurch gekennzeichnet, daß die Verwirbelungsmittel (144) in ihrer Ausdehnung und/oder ihrer Orientierung und/oder dem Abstand, in welchem sie aufeinanderfolgen, unregelmäßig angeordnet sind.

## Claims

1. Device for conveying waste water produced in a dental surgery, which waste water contains solid particles, to a central separating unit (28), comprising a collecting conduit (30) leading from the separating unit, and at least one connection conduit (32) leading from the collecting conduit to a work station (14), characterised in that there is provided at the end, remote from the collecting conduit (30), of each of the connection conduits (32) an intermittently activated flushing medium source (44, 70; 146) which provides a mixture consisting of water and air as the flushing medium and in that the flushing medium source (44, 70) has a reservoir (44) for a volume of water (92) having an inlet which is connectable to a flushing air opening (68) by means of a flushing air valve (70) so that the latter is connectable (70) to the associated connection conduit (32) substantially at the same time as the interior of the reservoir (44).

2. Device according to claim 1, characterized in that the flushing air opening (68) lies above the surface of the volume of water (92) and is controlled by a servo valve (70).

3. Device according to claim 2, wherein the disposal connection is the inlet of a central separating unit (28) for the solids particles and the air outlet of the separating unit (28) is connected to the inlet of a suction machine (26), characterized in that the servo valve is formed by a station selecting valve (48) by means of which a vacuum consumer (78) of the work station (14) is connectable to the connection conduit (32).

4. Device according to any one of claims 1 to 3, characterised in that a sound absorber (72) is associated with each of the flushing air openings (68).

5. Device according to any one of claims 1 to 4, characterised in that the reservoir (44) is constructed as a siphon.

6. Device according to any one of claims 1 to 5, characterized in that the reservoir (44) is connected to a controllable flushing water source (62).

7. Device according to claim 6, characterised in that the reservoir (44) has in its top wall (96), in the part lying above the siphon inlet portion (98), a connection (108, 110) for a conduit (50) that leads to the cuspidor (58), and a connection (112) for the flushing air control valve (70), and is provided in its portion lying above the outlet chamber (104) with a connection (114) for a station selecting valve (48) and preferably in addition with a connection (116) for a supplementary air valve (46).

8. Device according to any one of claims 1 to 7, characterised in that the reservoir (44) is connected via a cut-off valve (52) to an intermediate store (54) arranged downstream of the cuspidor (58) of the work station (14).

9. Device according to any one of claims 3 to 8, characterized in that an operating sensor (82) is in each case associated with the vacuum consumer (78) of a work station (14), and a control unit (40) is acted upon by the output signals of all the operating sensors (82) and supplies an activation signal for the flushing medium source (44, 70) for a predetermined period of time (122) whenever the number of operating sensors indicating that the associated vacuum consumer (78) is operating is below a predetermined minimum.

10. Device according to claim 9, characterised in that the activation signal is passed to the flushing medium sources (44, 70) via delay elements (124), the delay time of which is coordinated with the length of the respective connection conduit (32).

11. Device according to any one of claims 1 to 10, characterised in that the reservoir (44) is in each case connected to a controllable flushing water source (62), and an output signal of a manually operated switch (128) or of a clock (142), which act on the control terminal of the flushing water source (62), is passed via a delay element (138) to a control circuit (122) which then produces an activation signal for the flushing medium source (44, 70) for a predetermined period of time.

12. Device according to any one of claims 1 to 11, characterised in that the or an additional flushing medium source (146) comprises a mixing element (150) which is connectable via a first servo valve (156) to a water source (32) under pressure, especially a fresh water conduit, and is connectable via a second servo valve (158) to a compressed air source (16 to 20).

13. Device according to any one of claims 1 to 12, characterised in that, at least in portions of the connection conduits (32) and/or of the collecting conduit (30), conduit parts (32-II) are provided that are of reduced diameter in comparison with adjacent conduit parts (32-I, 32-III).

14. Device according to any one of claims 1 to 13, characterised in that swirling means (144) are provided in the connection conduits (32) and preferably also in the collecting conduit (30).

15. Device according to claim 14, characterised in that the swirling means (144) are formed by indentations of the conduit wall.

16. Device according to claim 14 or 15, characterised in that the swirling means (144) are arranged irregularly with regard to their extent and/or their orientation and/or their spacing from one another.

## Revendications

1. Dispositif d'acheminement, vers un groupe séparateur (28), central d'eaux résiduaires produites dans un cabinet dentaire et renfermant des particules solides, comprenant un conduit collecteur (30) partant du groupe séparateur (28), et au moins un conduit de jonction (32) partant du conduit précité et menant à un poste de soins (14), caractérisé par le fait qu'une source (44, 70; 146) d'agent de rinçage, activée par intermittence et prévue à l'extrémité de chacun des conduits de jonction (32) qui est éloignée du conduit collecteur (30), élabore un mélange constitué d'eau et d'air et représentant un agent de rinçage et le fait que la source (44, 70) d'agent de rinçage présente, respectivement, un récipient (44) de réserve d'un volume d'eau (92) dont l'entrée peut communiquer avec un orifice (68) à air de chasse par l'intermediaire d'une vanne (70) à air de chasse, de manière que l'orifice (68) à air de chasse peut-être relié au conduit de jonction (32) associé, pour l'essentiel en même temps que l'espace interne du récipient de réserve (44).

2. Dispositif selon la revendication 1, caractérisé par le fait que l'orifice (68) à air de chasse se trouve au-dessus du niveau du volume d'eau (92), et est commandé par l'intermédiaire d'une servovanne (70).

3. Dispositif selon la revendication 2, dans lequel le raccord d'évacuation est l'admission d'un groupe central (28) séparateur des particules solides, et la sortie d'air du groupe séparateur (28) est reliée à l'entrée d'une machine d'aspiration (26), caractérisé par le fait que la servovanne est formée d'une vanne (48) de sélection de poste, par l'intermédiaire de laquelle un consommateur de dépression (78) du poste de soins (14) peut être relié au conduit de jonction (32).

4. Dispositif selon l'une des revendications 1 à 3, caractérisé par le fait qu'un silencieux (72) est respectivement affecté aux orifices (68) à air de chasse.

5. Dispositif selon l'une des revendications 1 à 4, caractérisé par le fait que le récipient de réserve (44) est réalisé sous la forme d'un siphon.

6. Dispositif selon l'une des revendications 1 à 5, caractérisé par le fait que le récipient de réserve (44) est relié à une source (62) d'eau de rinçage, de type commandable.

7. Dispositif selon la revendication 6, caractérisé par le fait que le récipient de réserve (44) présente dans sa paroi de recouvrement (96), dans sa partie située au-dessus de la zone d'admission (98) du siphon, un raccord (108, 110) destiné à un conduit (50) menant au crachoir (58), et un raccord (112) destiné à la vanne (70) de commande de l'air de chasse ; et est pourvu, dans sa région située au-dessus d'une chambre de sortie (104), d'un raccord (114) destiné à une vanne (48) de sélection de poste et additionnellement, de préférence, d'un raccord (116) destiné à une vanne (46) à air secondaire.

8. Dispositif selon l'une des revendications 1 à 7, caractérisé par le fait que le récipient de réserve (44) est relié, par l'entremise d'une vanne de séparation (52), à un accumulateur intermédiaire (54) branché en aval du crachoir (58) du poste de soins (14).

9. Dispositif selon l'une des revendications 3 à 8, caractérisé par le fait qu'un capteur d'actionnement (82) est respectivement affecté au consommateur de dépression (78) d'un poste de soins (14) ; et une unité de commande (40) est sollicitée par les signaux de sortie de tous les capteurs d'actionnement (82) et élabore ensuite respectivement, pour un laps de temps préétabli (122), un signal d'activation de la source (44, 70) d'agent de rinçage lors du dépassement négatif d'un nombre minimal préétabli de capteurs d'actionnement indiquant un fonctionnement du consommateur de dépression (78) associé.

10. Dispositif selon la revendication 9, caractérisé par le fait que le signal d'activation est appliqué, aux sources (44, 70) d'agent de rinçage, par l'intermédiaire d'opérateurs de temporisation (124) dont la période de temporisation est assignée à la longueur du conduit de jonction (32) considéré.

11. Dispositif selon l'une des revendications 1 à 10, caractérisé par le fait que le récipient de réserve (44) est respectivement relié à une source (62) d'eau de rinçage, de type commandable ; et un signal de sortie d'un interrupteur (128) actionné manuellement ou d'un générateur de rythme (142), agissant sur la borne de commande de la source (62) d'eau de rinçage, est appliqué, par l'intermédiaire d'un opérateur de temporisation (138), à un circuit de commande (122) qui engendre ensuite, pour un laps de temps préétabli, un signal d'activation de la source (44, 70) d'agent de rinçage.

12. Dispositif selon l'une des revendications 1 à 11, caractérisé par le fait que la source ou une source supplémentaire (146) d'agent de rinçage présente un élément mélangeur (150) qui peut être relié, par l'intermédiaire d'une première servovanne (156), à une source d'eau (34) soumise à une pression, en particulier un conduit à eau fraîche, et peut être relié, par l'intermédiaire d'une seconde servovanne (158), à une source d'air comprimé (16 à 20).

13. Dispositif selon l'une des revendications 1 à 12, caractérisé par le fait que des parties de conduits (32-II), prévues au moins dans des segments des conduits de jonction (32) et/ou du conduit collecteur (30), présentent un diamètre réduit par rapport à des parties de conduits voisines (32-I, 32-III).

14. Dispositif selon l'une des revendications 1 à 13, caractérisé par le fait que des moyens (144) générateurs de tourbillons sont prévus dans les conduits de jonction (32), de préférence également dans le conduit collecteur (30).

15. Dispositif selon la revendication 14, caractérisé par le fait que les moyens (144) générateurs de tourbillons sont formés par des empreintes rentrantes de la paroi des conduits.

16. Dispositif selon la revendication 14 ou 15, caractérisé par le fait que les moyens (144) générateurs de tourbillons sont agencés de manière irrégulière quant à leur étendue et/ou à leur orientation et/ou à la distance dont ils se succèdent.
